(19) **Europäisches Patentamt**

**European Patent Office**

**Office européen des brevets**

(11) **EP 1 307 001 B1**

(12) **EUROPEAN PATENT SPECIFICATION**

(45) Date of publication and mention
of the grant of the patent:
**01.02.2006 Bulletin 2006/05**

(51) Int Cl.:
*H04L 12/18* (2006.01)       *H04L 12/24* (2006.01)
*H04L 12/56* (2006.01)

(21) Application number: **02022940.7**

(22) Date of filing: **11.10.2002**

(54) **Band guarantee system, relay device, and network management server**

System zur Bandbreitegewährleistung, Relaisvorrichtung und Netzwerkmanagement-Server

Système de garantie de bande, dispositif de relais et serveur de gestion de réseau

(84) Designated Contracting States:
**DE FR GB**

(30) Priority: **25.10.2001 JP 2001327193**

(43) Date of publication of application:
**02.05.2003 Bulletin 2003/18**

(73) Proprietor: **MATSUSHITA ELECTRIC INDUSTRIAL CO., LTD.**
**Kadoma-shi, Osaka 571-8501 (JP)**

(72) Inventors:
• **Matuoka, Makoto**
  Iizuka-shi,
  Fukuoka-ken,
  Iizuka (JP)
• **Shimazu, Mikio**
  Kasuya-Gun,
  Fukuoka-Ken,
  Kasuya-Gun (JP)
• **Kumazawa, Masayuki**
  Kasuya-Gun,
  Fukuoka-Ken,
  Kasuya-Gun (JP)
• **Shimizu, Yuji**
  Koga-Shi,
  Fukuoka-Ken,
  Koga (JP)
• **Gotoh, Hiroki**
  Kadoma-Shi,
  Osaka,
  Kadoma (JP)
• **Sakai, Akira**
  Yokohama-Shi,
  Kanagawa-Ken,
  Yokohama (JP)

(74) Representative: **Balsters, Robert et al**
**Novagraaf International SA**
**25, avenue du Pailly**
**1220 Les Avanchets - Geneva (CH)**

(56) References cited:
**EP-A- 0 678 996**        **EP-A- 1 137 227**
**US-A- 5 793 978**

• BALDI M ET AL: "Adaptive real-time group multicast" INFOCOM '97. SIXTEENTH ANNUAL JOINT CONFERENCE OF THE IEEE COMPUTER AND COMMUNICATIONS SOCIETIES. DRIVING THE INFORMATION REVOLUTION., PROCEEDINGS IEEE KOBE, JAPAN 7-11 APRIL 1997, LOS ALAMITOS, CA, USA,IEEE COMPUT. SOC, US, 7 April 1997 (1997-04-07), pages 683-691, XP010252090 ISBN: 0-8186-7780-5
• LEGOUT A ET AL: "Bandwidth allocation policies for unicast and multicast flows" INFOCOM '99. EIGHTEENTH ANNUAL JOINT CONFERENCE OF THE IEEE COMPUTER AND COMMUNICATIONS SOCIETIES. PROCEEDINGS. IEEE NEW YORK, NY, USA 21-25 MARCH 1999, PISCATAWAY, NJ, USA,IEEE, US, 21 March 1999 (1999-03-21), pages 254-261, XP010323755 ISBN: 0-7803-5417-6
• SHU-JEN FANG ET AL: "Reactive bandwidth arbitration for priority and multicasting control in ATM switching" COMMUNICATIONS, 1997. ICC '97 MONTREAL, TOWARDS THE KNOWLEDGE MILLENNIUM. 1997 IEEE INTERNATIONAL CONFERENCE ON MONTREAL, QUE., CANADA 8-12 JUNE 1997, NEW YORK, NY, USA,IEEE, US, 8 June 1997 (1997-06-08), pages 1724-1728, XP010226932 ISBN: 0-7803-3925-8

## EP 1 307 001 B1

**Description**

This invention relates to a band guarantee system, which guarantees useable bands for user terminals or relay units that use a shared network, and arts related to such a band guarantee system.

Generally with the Internet, since a plurality of user terminals share a line through a best effort system, the resources (bands) necessary for communication may not be obtained depending on the conditions of network congestion.

Quality of service (QoS) arts for guaranteeing communication resources (bands) are thus being noted.

Included since priorly among such QoS arts are band guarantee systems that realize band guarantee for unicast communication in a shared network.

Also, due to the high band usage efficiency, multicast communication has been used since priorly with the Internet.

With multicast communication, a single multicast IP address (multicast address), from among a specific set of IP addresses, is used for each single multicast traffic.

One multicast packet is then copied as necessary by a relay unit (for example, a router) and transmitted to a single or a plurality of user terminals (group members) that receive the multicast traffic.

However priorly, only band guarantee systems that accommodate unicast communication existed and there were no band guarantee systems that accommodate for multicast communication. The document "Bandwidth Allocation Policies for Unicast and Multicast Flows" (by A. Legout , J. Nonnenmacher and E.W. Biersock) describes different bandwidth allocation policies unicast and multicast flows but does not dead with the problem of guaranteeing a certain band for a terminal consuming only unicast traffic.

An object of this invention is therefore to provide a band guarantee system and art related thereto by which band guarantee, which accommodates for multicast communication, can be realized in a shared network.

This object is achieved according the system of claim 1.

The above, and other objects, features and advantages of the present invention will become apparent from the following description read in conjunction with the accompanying drawings, in which like reference numerals designate the same elements.

<u>BRIEF DESCRIPTION OF THE DRAWINGS</u>

Fig. 1 is a block diagram of a exemplary band guarantee system of an embodiment of this invention.

Fig. 2 is a block diagram of the exemplary router and the exemplary network management server of the band guarantee system of Fig. 1.

Fig. 3 is an example diagram of exemplary operation rules held by the operation rules holding unit of Fig. 2 for a case where the subjects of band guarantee are user terminals.

Fig. 4 is an example diagram of network configuration information managed by the configuration information management unit of Fig. 2 for the case where the subjects of band guarantee are user terminals.

Fig. 5 is an example diagram of multicast information managed by the multicast management unit of Fig. 2 for the case where the subjects of band guarantee are user terminals.

Fig. 6(a) is a conceptual diagram for a case where there is one group member.

Fig. 6(b) is an example diagram of the result of calculation by (Equation 1) for the same case.

Fig. 7(a) is a conceptual diagram for a case where there are two group members.

Fig. 7(b) is an example diagram of the result of calculation by (Equation 1) for the same case.

Fig. 8(a) is a conceptual diagram for a case where there are three group members.

Fig. 8(b) is an example diagram of the result of calculation by (Equation 1) for the same case.

Fig. 9(a) is a conceptual diagram for a case where each user terminal uses a single multicast or a plurality of multicasts.

Fig. 9(b) is an example diagram of the result of calculation by (Equation 1) for the same case.

Fig. 10 is an example diagram of a case where none of the user terminals use multicast.

Fig. 11 is an example diagram of other exemplary operation rules held by the operation rules holding unit of Fig. 2 for a case where the subjects of band guarantee are user terminals.

Fig. 12 an example diagram of the result of calculation by (Equation 2) for a case where the subjects of band guarantee are user terminals and there are three group members.

Fig. 13 is an example diagram of exemplary operation rules held by the operation rules holding unit of Fig. 2 for a case where the subjects of band guarantee are home routers.

Fig. 14 is an example diagram of network configuration information managed by the configuration information management unit of Fig. 2 for the case where the subjects of band guarantee are home routers.

Fig. 15 is an example diagram of multicast information managed by the multicast management unit of Fig. 2 for the case where the subjects of band guarantee are home routers.

Fig. 16 is an example diagram of other exemplary operation rules held by the operation rules holding unit of Fig. 2 for the case where the subjects of band guarantee are home routers.

Embodiments of this invention shall now be described with reference to the drawings.

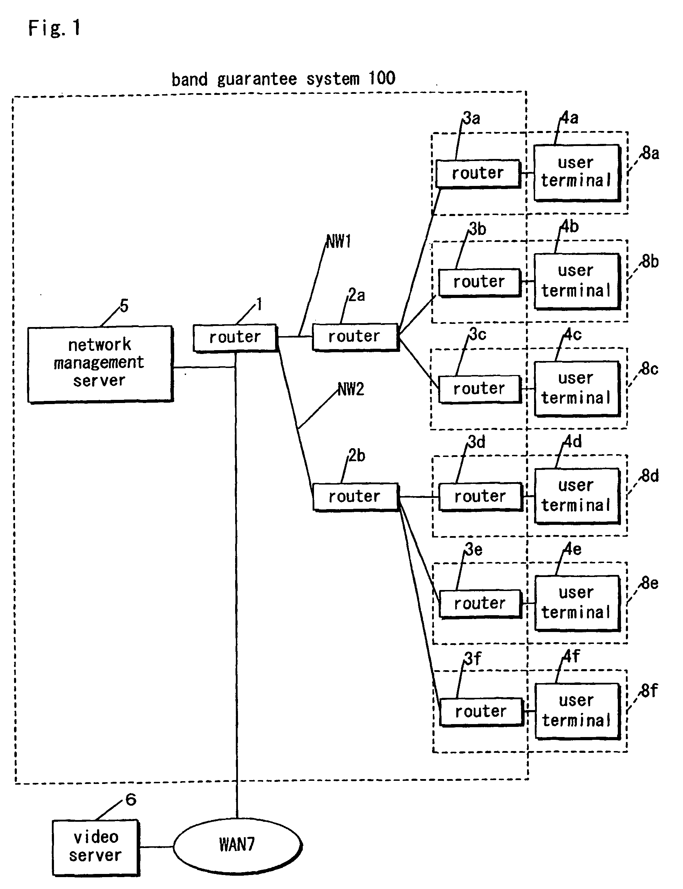

Fig. 1 is a block diagram of a exemplary band guarantee system of an embodiment of this invention. As shown in Fig. 1, this exemplary band guarantee system 100 is equipped with routers 1, 2a, 2b, and 3a to 3f and a network management server 5.

Network management server 5 is connected to router 1 and a WAN (Wide Area Network) 7. Router 1 is connected to WAN 7 and to shared networks NW1 and NW2.

Shared network NW1 is connected to router 2a. Router 2a is connected routers 3 a, 3b, and 3c.

Router 3a is connected to a user terminal 4a, router 3b is connected to a user terminal 4b, and router 3c is connected to a user terminal 4c. Shared network NW1 is thus a network that is shared by user terminals 4a to 4c.

Shared network NW2 is connected to router 2b. Router 2b is connected to routers 3d, 3e, and 3f.

Router 3d is connected to a user terminal 4d, router 3e is connected to a user terminal 4e, and router 3f is connected to a user terminal 4f. Shared network NW2 is thus a network that is shared by user terminals 4d, 4e, and 4f.

It may also be said that shared network NW1 is a network that is shared by routers 3a to 3c, and it may also be said that shared network NW2 is a network that is shared by routers 3d to 3f.

A video server 6 is connected to WAN 7.

Each of the abovementioned router 1, routers 2a and 2b, and routers 3a to 3f is an example of a relay device or a relay unit for packets.

A multicast packet is transmitted from video server 6, copied as necessary at routers 1, 2a, and 2b, and then distributed to user terminals 4a to 4f.

A specific arrangement of the network management server 5 and router 1 of Fig. 1 shall now be described.

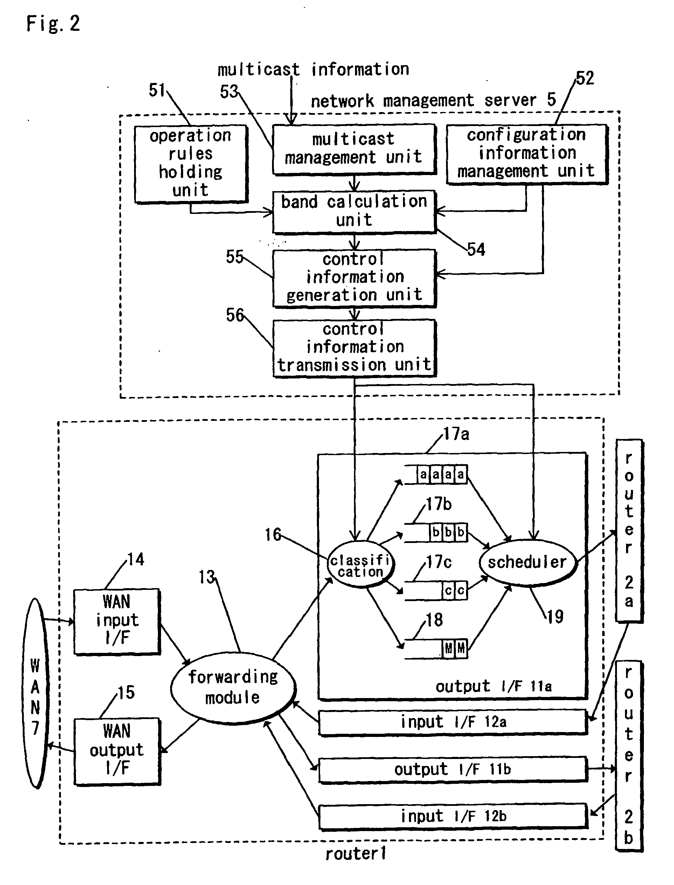

Fig. 2 is a block diagram of exemplary network management server 5 and exemplary router 1. In Fig. 2, the parts that are the same as those of Fig. 1 are provided with the same symbols used in Fig. 1.

As shown in Fig. 2, exemplary network management server 5 is equipped with an operation rules holding unit 51, configuration information management unit 52, multicast management unit 53, band calculation unit 54, control information generation unit 55, and control information transmission unit 56.

Exemplary router 1 is equipped with output interfaces (output I/F) 11a and 11b, input interfaces (input I/F) 12a and 12b, forwarding module 13, WAN input interface (WAN input I/F) 14, and WAN output interface (WAN output I/F) 15.

Output 1/F 11a is equipped with a classification unit 16, scheduler 19, multicast queue 18, and queues 17a, 17b, and 17c. These queues 17a, 17b, and 17c are provided in correspondence to the subjects of band guarantee.

If the subjects of band guarantee are, for example, the user terminals 4a to 4c, queue 17a is provided in correspondence to user terminal 4a, queue 17b is provided in correspondence to user terminal 4b, and queue 17c is provided in correspondence to user terminal 4c.

If the subjects of band guarantee are, for example, the routers 3a to 3c, queue 17a is provided in correspondence to router 3a, queue 17b is provided in correspondence to router 3b, and queue 17c is provided in correspondence to router 3c.

The arrangement of output I/F 11b is the same as that of output I/F 11a.

Output I/F 11a and input I/F 12a are connected to router 2a, and output I/F 11b and input I/F 12b are connected to router 2b.

WAN input I/F 14 and WAN output I/F 15 are connected to WAN 7.

The functions and operations of network management server 5 of the band guarantee system 100 of the present embodiment shall now be described.

Here, cases where the subjects of band guarantee are user terminals 4a to 4f and cases where the subjects of band guarantee are routers 3a to 3f shall be described separately.

First, cases where the subjects of band guarantee are user terminals 4a to 4f shall be described.

The operation rules holding unit 51 of Fig. 2 shall now be described.

Operation rules holding unit 51 of Fig. 2 holds information on the bands (guaranteed bands) that are guaranteed for user terminals 4a to 4c and the band consumption rule information of the shared network NW1. The guaranteed band information and the band consumption rule information held by operation rules holding unit 51 shall be referred to collectively as "operation rules information."

The band consumption rule information is information on a rule that sets forth how a band necessary for transmission of multicast traffic is consumed when at least one unit among the user terminals 4a to 4c that use shared network NW1 uses the multicast traffic.

To be more specific, the band consumption rule information comprises the rule on how the guaranteed band of a user terminal that receives multicast traffic (such a user terminal shall be referred to hereinafter as a "group member") is reduced in a manner such that the group member consumes the band necessary for transmission of the multicast traffic. Here, a band that is subtracted from a guaranteed band shall be referred to as a "subtracted band."

Operation rules holding unit 51 also holds the information on the bands (guaranteed bands) that are guaranteed for user terminals 4d to 4f and the band consumption rule information of the shared network NW2.

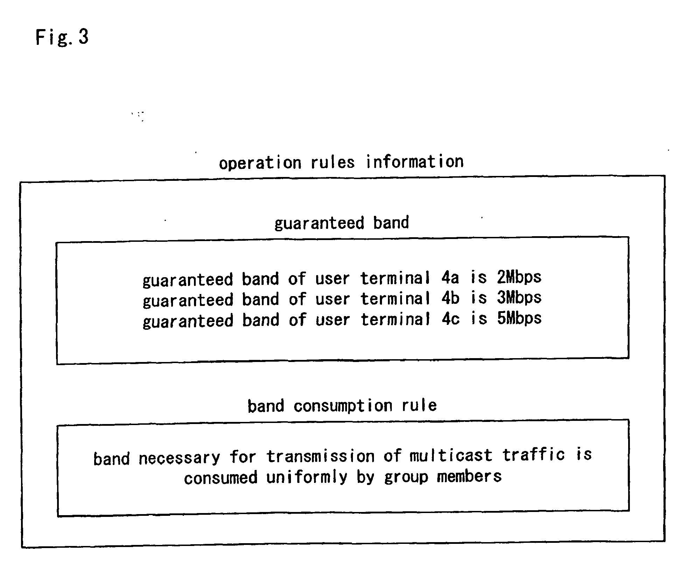

Fig. 3 is an example diagram of the exemplary operation rules information held by operation rules holding unit 51. An example of the operation rules information for user terminals 4a to 4c is shown in Fig. 3.

An example, wherein the band of shared network NW1 is 10Mbps, and of this, the guaranteed band of user terminal 4a is 2Mbps, the guaranteed band of user terminal 4b is 3Mbps, and the guaranteed band of user terminal 4c is 5Mbps, is given in Fig. 3.

The example of Fig. 3 is also one in which the content of the band consumption rule stipulates that the band necessary for transmission of multicast traffic be consumed uniformly by the group members (user terminals that receive the multicast traffic).

Configuration information management unit 52 of Fig. 2 shall now be described.

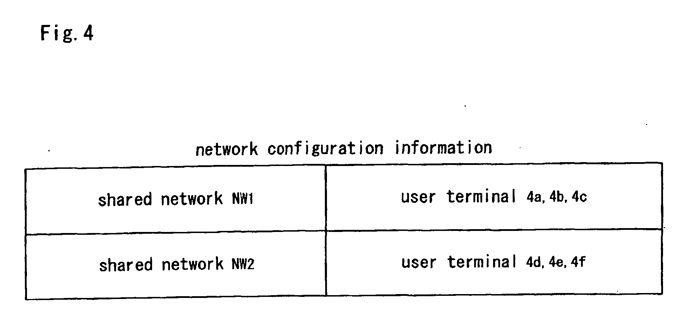

Fig. 4 is an example diagram of the network configuration information managed by configuration information management unit 52 of Fig. 2. As shown in Fig. 4, with configuration information management unit 52, the shared networks NW1 and NW2 and the user terminals 4a to 4f that use the shared networks are managed in an associated form as network configuration information.

Here, ascertainment of the user address is enabled for user terminals 4a to 4f.

Multicast management unit 53 of Fig. 2 shall now be described.

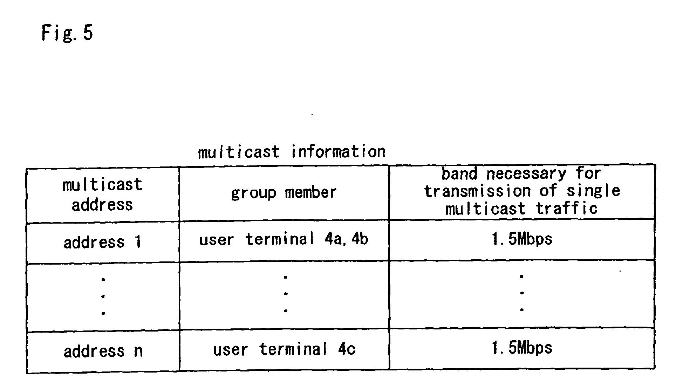

Fig. 5 is an example diagram of the multicast information managed by the multicast management unit 53 of Fig. 2. As shown in Fig. 5, with multicast management unit 53, multicast addresses, information on the group members (user terminals that receive multicast traffic), and information on the band necessary for transmission of a single multicast traffic are managed in an associated manner as multicast information.

Here, information on the group members (user terminals that receive the multicast traffic) is information by which the user terminals that receive multicast traffic can be identified directly or indirectly.

The addresses (user addresses) of user terminals that receive multicast traffic can be given as an example of information by which user terminals that receive multicast traffic can be identified directly.

The names of users that use multicast traffic via the user terminals can be given as an example of information by which user terminals that receive multicast traffic can be identified indirectly.

Multicast management unit 53 also renews the multicast information in accordance with a change of group member of each multicast traffic or the use of new multicast traffic. The specifics are described below.

With the present embodiment, the start of receiving and the end of receiving of multicast traffic are notified to video server 6 directly from user terminals 4a to 4f. User terminal information is included in this notification. This "user terminal information" is the same in meaning as the "group member information" managed by multicast management unit 53.

Upon receiving this notification, video server 6 notifies network management server 5 of the start of receiving and the end of receiving of multicast traffic. Multicast addresses, information on the band necessary for transmission of multicast traffic, and user terminal information are included in this notification.

Upon receiving this notification, network management server 5 ascertains any changes in group members and renews the multicast information accordingly.

However, the notification of the start of receiving and the end of receiving of multicast traffic to network management server 5 via video server 6 is only one example, and such a notification path does not have to be employed necessarily and another path may be employed as long as network management server 5 can ascertain the group members.

Band calculation unit 54 of Fig. 2 shall now be described.

Band calculation unit 54 uses the multicast information managed by multicast management unit 53 and the guaranteed band information held by operation rules holding unit 51 to calculate bands to be allocated to the respective user terminals 4a to 4f in accordance with the band consumption rule information held by operation rules holding unit 51.

Each band thus calculated by band calculation unit 54 and allocated to a user terminal among user terminals 4a to 4f is called the "remaining band" of the user terminal. In this case, the remaining band of a user terminal that uses multicast traffic will be the band obtained by subtracting the subtracted band from the guaranteed band, and for a user terminal that does not use multicast traffic, the remaining band will be its guaranteed band since the subtracted band is "0."

Here, band calculation unit 54 calculates the remaining bands for the respective user terminals 4a to 4f according to each of the shared networks NW1 and NW2 based on the network configuration information managed by configuration information management unit 52.

Even in the case where the same multicast traffic is to be used in the two shared networks NW1 and NW2, the remaining band of each of user terminals 4a to 4f is calculated according to each of shared networks NW1 and NW2.

In the case where a single multicast traffic is to be used in shared network NW1, band calculation unit 54 makes the band necessary for transmission of the multicast traffic be the band allocated to multicast queue 18 of Fig. 2, and in the case where a plurality of multicast traffic are to be used, band calculation unit 54 makes the total of the bands necessary for transmission of the respective multicast traffic be the band allocated to multicast queue 18.

Meanwhile, in the case where a single multicast traffic is to be used in shared network NW2, band calculation unit 54 makes the band necessary for transmission of the multicast traffic be the band allocated to the multicast queue (not shown) of output I/F 11b of Fig. 2, and in the case where a plurality of multicast traffic are to be used, band calculation unit 54 makes the total of the bands necessary for transmission of the respective multicast traffic as the band allocated to the multicast queue of output I/F 11b.

Band calculation unit 54 then outputs the information on the remaining band of each of user terminals 4a to 4f and the information on the bands to be allocated to the multicast queues to control information generation unit 55.

Each time multicast management unit 53 renews multicast information in accordance with a change of group member, etc., band calculation unit 54 calculates the remaining bands anew based on the renewed multicast information. The bands allocated to multicast queues are also calculated anew based on the renewed multicast information.

A specific example of remaining band calculation by band calculation unit 54 shall now be described.

For example, in the case where operation rules holding unit 51 holds the band consumption rule information shown in Fig. 3, band calculation unit 54 uses the following equation to calculate the remaining band of each user terminal that uses a single multicast traffic or a plurality of multicast traffic:

[Equation 1]

$$\text{Remaining band} = \text{Guaranteed band} - \Sigma \, (\text{Band necessary for a single multicast traffic / Number of group members})$$

With (Equation 1), a quotient is determined by dividing the band necessary for transmission of a single multicast traffic by the number of group members, the determined quotient (subtracted band) is subtracted from the guaranteed band of a group member, and the difference thus obtained is made the remaining band of that group member.

A quotient (subtracted band) is determined for each multicast traffic in (Equation 1) since there are cases where each user terminal uses a plurality of multicast traffic. For the sake of simplicity, with the next example, a case where a single multicast traffic is used by user terminals 4a to 4e of Fig. 1 and the remaining bands are calculated using (Equation 1) shall be assumed.

Since the remaining bands are calculated according to each of shared networks NW1 and NW2, in the present case, the number of group members in (Equation 1) is set to "3" for calculation of the remaining band of each of user terminals 4a to 4c and the number of group members in (Equation 1) is set to "2" for calculation of the remaining band of each of user terminals 4d and 4e.

Meanwhile, since the subtracted band is "0" for user terminal 4f, which does not use multicast traffic, band calculation unit 54 makes the guaranteed band of user terminal 4f be its remaining band of user terminal 4f.

Also, band calculation unit 54 makes the bands necessary for transmission of multicast traffic be the bands allocated to multicast queue 18 of Fig. 2 and to the multicast queue (not shown) of output I/F 11b of Fig. 2.

Control information generation unit 55 of Fig. 2 shall now be described. Here, output I/F 11a of Fig. 2, which is connected to network NW1, shall be noted.

Control information generation unit 55 generates control information for controlling output I/F 11a of router 1 based on information on the remaining bands of the respective user terminals 4a to 4c and information on the band allocated to multicast queue 18 that have been output by band calculation unit 54.

The control information includes at least the following information instructed to scheduler 19 and information instructed to classification unit 16.

The information instructed to scheduler 19 is information that instructs scheduler 19 to make the remaining bands of the respective user terminals 4a to 4c calculated by band calculation unit 54 be the packet transmittable bands of the respective queues 17a to 17c and to make the band allocated to multicast queue 18 as calculated by band calculation unit 54 be the multicast packet transmittable band of multicast queue 18.

The information instructed to classification unit 16 is information that instructs classification unit 16 to make the multicast packets (packets with multicast addresses) be provided to multicast queue 18 and the packets besides multicast packets be allocated to the respective queues 17a to 17c in accordance with the packet destination addresses.

Such information instructed to classification unit 16 is prepared using the network configuration information managed by configuration information management unit 52.

Control information generation unit 55 also generates control information for controlling output I/F 11b of router 1 in the same manner as the control information for controlling output I/F 11a of router 1.

Also, when band calculation unit 54 calculates anew the remaining bands and bands allocated to the multicast queues in accordance with a change of group member, etc., control information generation unit 55 generates control information anew based on the new calculation results.

Control information transmission unit 56 shall now be described.

Control information transmission unit 56 transmits the control information generated by control information generation unit 55 to output I/F 11a and 11b of router 1.

Of the control information transmitted to output I/F 11a, the information instructed to scheduler 19 is referenced by scheduler 19, and of the control information transmitted to output I/F 11b, the information instructed to the scheduler (not shown) of output I/F 11b is referenced by the scheduler of output I/F 11b.

Also, of the control information transmitted to output I/F 11a, the information instructed to classification unit 16 is referenced by classification unit 16, and of the control information transmitted to output I/F 11b, the information instructed to the classification unit (not shown) of output I/F 11b is referenced by the classification unit of output I/F 11b.

Each time control information generation unit 55 generates control information anew in accordance with a change of group member, etc., control information transmission unit 56 transmits the newly generated control information to router 1.

As has been mentioned already, with the arrangement of Fig. 1, the sections that are shared by the plurality of user terminals 4a to 4f are router 1 to router 2a (shared network NW1) and router 1 to router 2b (shared network NW2).

Thus when the arrangement of Fig. 1 is employed, the band control for guaranteeing the bands in which the respective user terminals 4a to 4c can receive is performed at router 1. The control information is therefore transmitted to router 1.

The functions and operations of router 1 of band guarantee system 100 of the present embodiment shall now be described. First, output I/F 11a of Fig. 2 shall be described.

Classification unit 16 classifies packets received from a forwarding module 13 and then provides these packets to queues 17a to 17c or multicast queue 18.

To be more specific, classification unit 16 outputs multicast packets to multicast queue 18 as instructed by the control information received from control information transmission unit 56.

Meanwhile, with a packet that is not a multicast packet, classification unit 16 references the destination addresses to judge which of the user terminals 4a to 4c the packet is to be sent and then outputs the packet to the corresponding queue among queues 17a to 17c.

Here, if the destination of a packet is user terminal 4a, it is output to queue 17a, if the destination of a packet is user terminal 4b, it is output to queue 17b, and if the destination of a packet is user terminal 4c, it is output to queue 17c.

Each of queues 17a to 17c and multicast queue 18 outputs packets starting from the packet stored first.

Upon receiving instructions by control information from control information transmission unit 56, scheduler 19 sends packets to router 2a in accordance with the respective transmittable bands allocated to queues 17a to 17c.

For example, the remaining band for user terminal 4a that has been calculated by band calculation unit 54 becomes the transmittable band for queue 17a.

Also upon receiving instructions by control information from control information transmission unit 56, scheduler 19 sends multicast packets to router 2a in accordance with the transmittable band allocated to multicast queue 18.

When new control information is transmitted due to a change of group member, etc., classification unit 16 and scheduler 19 operate in accordance with the new control information.

The functions and operations of the classification unit (not shown), the three queues corresponding to user terminals 4d to 4f (not shown), the multicast queue (not shown), and the scheduler (not shown) of output I/F 11b are the same as the functions and operations of classification unit 16, the three queues 17a to 17c corresponding to user terminals 4a to 4c, multicast queue 18, and scheduler 19 of output I/F 11a.

WAN input I/F 14 is an interface for input of packets from WAN 7 into router 1. WAN output 1/F 15 is an interface for output of packets from router 1 to WAN 7.

Input I/F 12a is an interface for input of packets from router 2a into router 1. Input I/F 12b is an interface for input of packets from router 2b into router 1.

Forwarding module 13 carries out packet transactions among the plurality of input/output interfaces of output I/F 11a and 11b, input I/F 12a and 12b, WAN input I/F 14, and WAN output I/F 15.

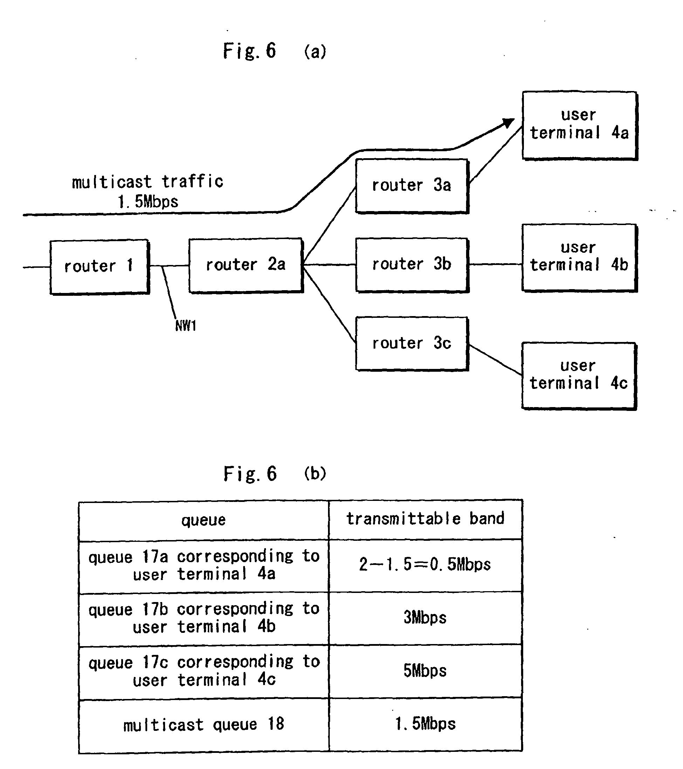

What the transmittable bands of the queues and multicast queue of Fig. 2 will be shall now be described by way of specific examples and using Figs. 6 through 10.

Here, the output I/F 11a of router 1 of Fig. 2 and user terminals 4a to 4c of Fig. 1 shall be noted.

It shall also be deemed that the band of shared network NW1 is 10Mbps, the operation rules holding unit 51 of Fig. 2 holds the operation rules of Fig. 3, and band calculation unit 54 calculates the remaining bands using (Equation 1).

Fig. 6 shows explanatory diagrams for a case where just user terminal 4a uses a single multicast traffic. Fig. 6(a) is a conceptual diagram of this case and Fig. 6(b) is an example diagram of the transmittable bands of queues 17a to 17c and multicast queue 18 of Fig. 2 for this case.

As shown in Fig. 6(a), the band necessary for transmission of the single multicast traffic used by user terminal 4a shall be 1.5Mbps.

In this case, as shown in Fig. 6(b), the transmittable band (remaining band) of queue 17a, corresponding to user terminal 4a, has the value of 0.5Mbps that is obtained by dividing the band of 1.5Mbps that is necessary for transmission of the multicast traffic by "1" (the number of group members) and subtracting the resulting quotient (subtracted band) from 2Mbps, which is the guaranteed band of user terminal 4a.

Since user terminals 4b and 4c do not use the multicast traffic, the guaranteed bands of the queues 17b and 17c corresponding to user terminals 4b and 4c are their transmittable bands. The transmittable band of multicast queue 18 is 1.5Mbps, which is the band necessary for transmission of the multicast traffic.

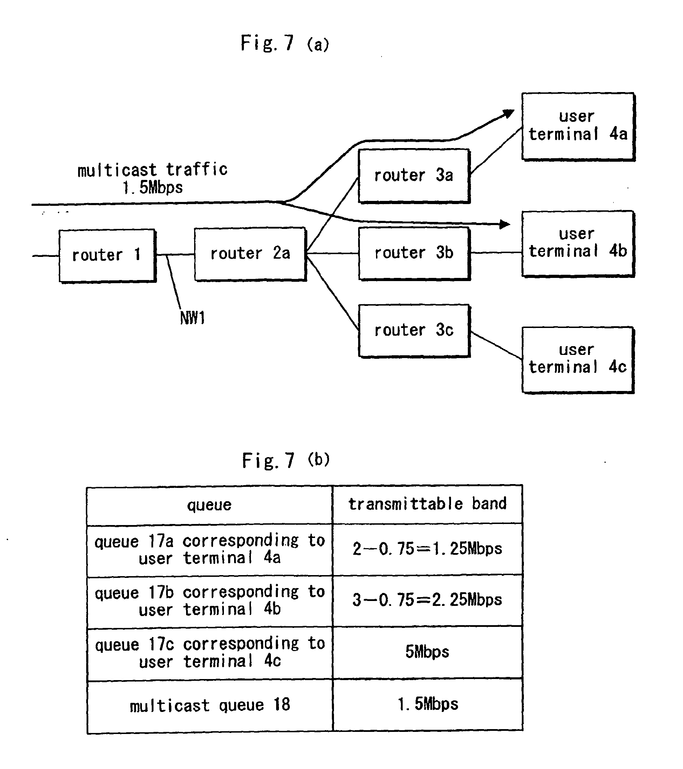

Fig. 7 shows explanatory diagrams for a case where just user terminals 4a and 4b use the same, single multicast traffic and user terminal 4c does not use multicast traffic. Fig. 7(a) is a conceptual diagram of this case and Fig. 7(b) is an example diagram of the transmittable bands of queues 17a to 17c and multicast queue 18 of Fig. 2 for this case.

As shown in Fig. 7(a), the band necessary for transmission of the single multicast traffic used by user terminals 4a and 4b shall be 1.5Mbps.

In this case, as shown in Fig. 7(b), the transmittable band (remaining band) of queue 17a, corresponding to user terminal 4a, has the value of 1.25Mbps that is obtained by dividing the band of 1.5Mbps that is necessary for transmission of the multicast traffic by "2" (the number of group members) and subtracting the resulting quotient (subtracted band) of 0.75Mbps from 2Mbps, which is the guaranteed band of user terminal 4a.

Likewise, the transmittable band (remaining band) of queue 17b, corresponding to user terminal 4b, has the value of 2.25Mbps that is obtained by dividing the band of 1.5Mbps that is necessary for transmission of the multicast traffic by "2" (the number of group members) and subtracting the resulting quotient (subtracted band) of 0.75Mbps from 3Mbps, which is the guaranteed band of user terminal 4b.

Since user terminal 4c does not use the multicast traffic, the guaranteed band of the queue 17c, corresponding to user terminal 4c, will be its transmittable band. The transmittable band of multicast queue 18 is 1.5Mbps, which is the band necessary for transmission of the multicast traffic.

The multicast packet is copied at router 2a and sent to routers 3a and 3b.

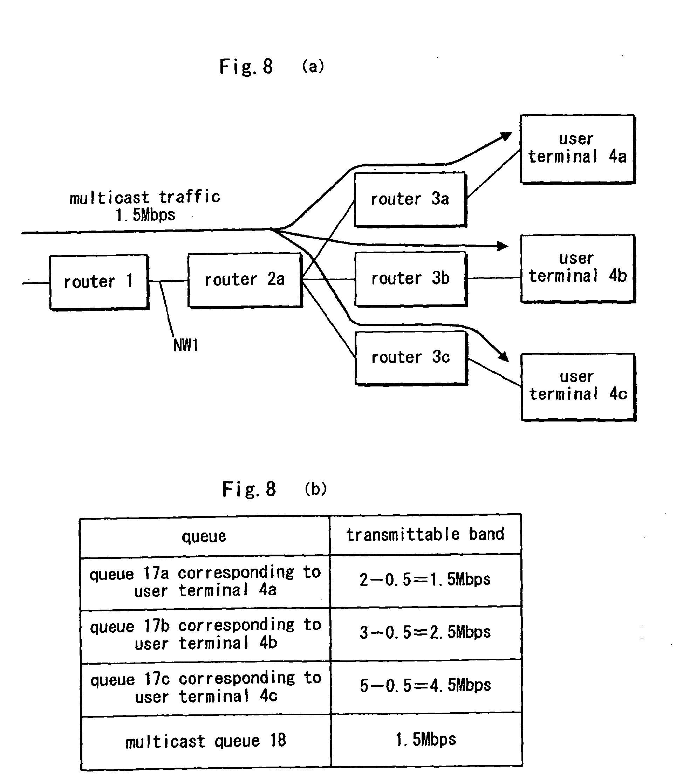

Fig. 8 shows explanatory diagrams for a case where user terminals 4a to 4c use the same, single multicast traffic. Fig. 8(a) is a conceptual diagram of this case and Fig. 8(b) is an example diagram of the transmittable bands of queues 17a to 17c and multicast queue 18 of Fig. 2 for this case.

As shown in Fig. 8(a), the band necessary for transmission of the single multicast traffic used by user terminals 4a to 4c shall be 1.5Mbps.

In this case, as shown in Fig. 8(b), the transmittable band (remaining band) of queue 17a, corresponding to user terminal 4a, has the value of 1.5Mbps that is obtained by dividing the band of 1.5Mbps that is necessary for transmission of the multicast traffic by "3" (the number of group members) and subtracting the resulting quotient (subtracted band) of 0.5Mbps from 2Mbps, which is the guaranteed band of user terminal 4a.

Likewise, the transmittable band (remaining band) of queue 17b, corresponding to user terminal 4b, has the value of 2.5Mbps that is obtained by dividing the band of 1.5Mbps that is necessary for transmission of the multicast traffic by "3" (the number of group members) and subtracting the resulting quotient (subtracted band) of 0.5Mbps from 3Mbps, which is the guaranteed band of user terminal 4b.

Likewise, the transmittable band (remaining band) of queue 17c, corresponding to user terminal 4c, has the value of 4.5Mbps that is obtained by dividing the band of 1.5Mbps that is necessary for transmission of the multicast traffic by "3" (the number of group members) and subtracting the resulting quotient (subtracted band) of 0.5Mbps from 5Mbps, which is the guaranteed band of user terminal 4c.

The transmittable band of multicast queue 18 is 1.5Mbps, which is the band necessary for transmission of the multicast traffic.

The multicast packet is copied at router 2a and sent to routers 3a to 3c.

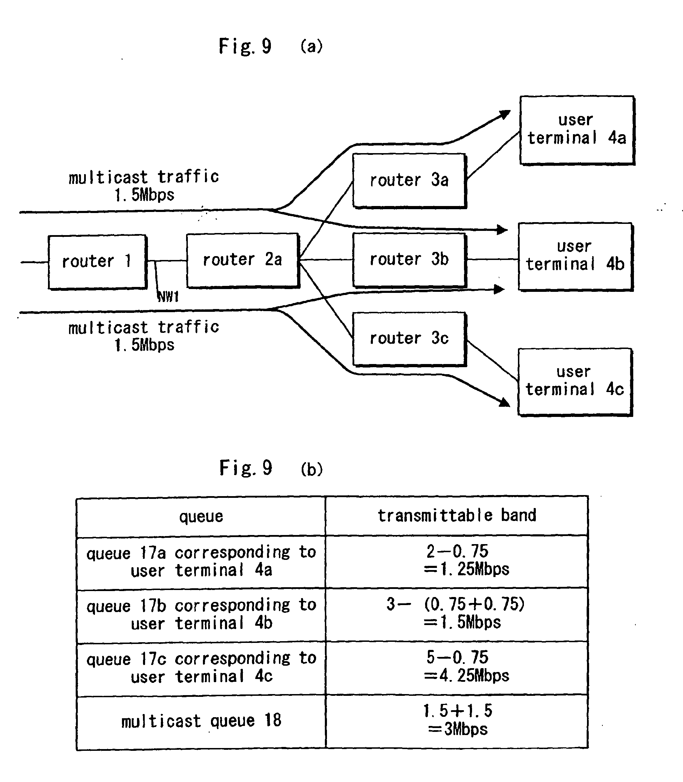

Fig. 9 shows explanatory diagrams for a case where user terminals 4a and 4b use the same, single multicast traffic and user terminals 4b and 4c use another same, single multicast traffic.

Fig. 9(a) is a conceptual diagram of this case and Fig. 9(b) is an example diagram of the transmittable bands of queues 17a to 17c and multicast queue 18 of Fig. 2 for this case.

As shown in Fig. 9(a), the band necessary for transmission of the single multicast traffic used by user terminals 4a and 4b shall be 1.5Mbps, and the band necessary for transmission of the other single multicast traffic used by user terminals 4b and 4c shall be 1.5Mbps.

User terminal 4a uses just the same single multicast traffic as user terminal 4b.

Thus as shown in Fig. 9(b), the transmittable band (remaining band) of queue 17a, corresponding to user terminal 4a, has the value of 1.25Mbps that is obtained by dividing the band of 1.5Mbps that is necessary for transmission of the multicast traffic by "2" (the number of group members) and subtracting the resulting quotient (subtracted band) of 0.75Mbps from 2Mbps, which is the guaranteed band of user terminal 4a.

Since the group members in this case are user terminals 4a and 4b, the number of group members in (Equation 1) is set to "2."

User terminal 4c uses just the same single multicast traffic as user terminal 4b.

Thus as shown in Fig. 9(b), the transmittable band (remaining band) of queue 17c, corresponding to user terminal 4c, has the value of 4.25Mbps that is obtained by dividing the band of 1.5Mbps that is necessary for transmission of the multicast traffic by "2" (the number of group members) and subtracting the resulting quotient (subtracted band) of 0.75Mbps from 5Mbps, which is the guaranteed band of user terminal 4c.

Since the group members in this case are user terminals 4b and 4c, the number of group members in (Equation 1) is set to "2."

User terminal 4b uses the same single multicast traffic as user terminal 4a and the same single multicast traffic as user terminal 4c.

Thus in (Equation 1), the subtracted band for the same single multicast traffic as user terminal 4a is equal to the quotient of 0.75Mbps obtained by dividing the band of 1.5Mbps necessary for transmission of the multicast traffic by "2" (the number of group members).

Meanwhile in (Equation 1), the subtracted band for the same single multicast traffic as user terminal 4c is equal to the quotient of 0.75Mbps obtained by dividing the band of 1.5Mbps necessary for transmission of the multicast traffic by "2" (the number of group members).

The sum of the subtracted band of 0.75Mbps for the same single multicast traffic as user terminal 4a and the subtracted band of 0.75Mbps for the same single multicast traffic as user terminal 4c is 1.5Mbps.

The transmittable band (remaining band) of queue 17b, corresponding to user terminal 4b, thus has the value of 1.5Mbps that is obtained by subtracting 1.5Mbps, which is the sum of the subtracted bands, from 3Mbps, which is the guaranteed band of user terminal 4b.

Since two multicast traffic will flow through shared network NW1, the transmittable band of multicast queue 18 is 3Mbps, which is the sum of the bands of 1.5Mbps each that are necessary for transmission of the respective multicast traffic.

The multicast packets are copied at router 2a and sent to routers 3a to 3c.

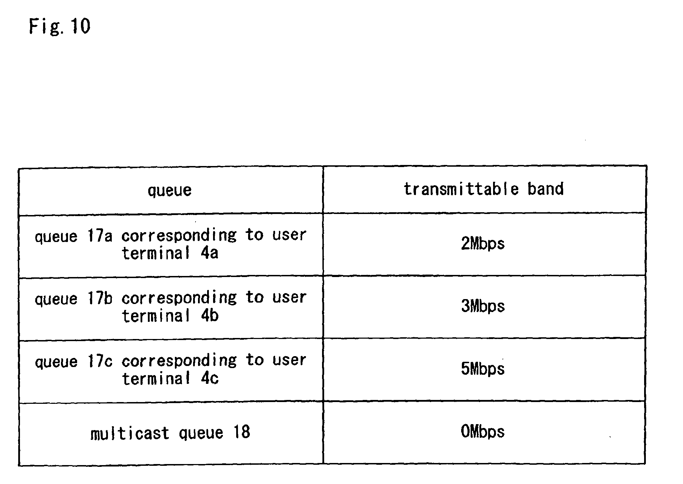

Fig. 10 is an explanatory diagram of a case where user terminals 4a to 4c do not use multicast traffic.

In the case where user terminals 4a to 4c do not use multicast traffic, the transmittable bands of queues 17a to 17c corresponding to user terminals 4a to 4c are their respective guaranteed bands.

Since multicast traffic does not flow through shared network NW1, the transmittable band of multicast queue 18 is 0Mbps.

An example of operation rules that differ from the operation rules of Fig. 3 shall now be described.

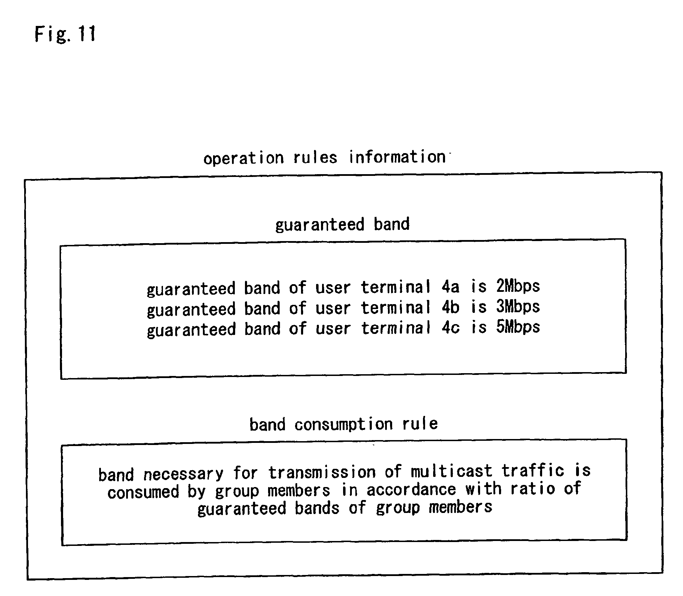

Fig. 11 is an example diagram of other exemplary operation rules information held by operation rules holding unit 51 of Fig. 2. An example of operation rules information for user terminals 4a to 4c is shown in Fig. 11.

With regard to the information on guaranteed bands in Fig. 11, the band of shared network NW1 is 10Mbps, and of this 10Mbps, the guaranteed band of user terminal 4a is 2Mbps, the guaranteed band of user terminal 4b is 3Mbps, and the guaranteed band of user terminal 4c is 5Mbps. The present example is the same as that of Fig. 3 in regard to this point.

The example of Fig. 11 is also one in which the content of the band consumption rule stipulates that the band necessary for transmission of multicast traffic be consumed by the user terminals that receive the multicast traffic (group members) in accordance with the ratio of the guaranteed bands of the user terminals that receive the multicast traffic (group members).

In the case where operation rules holding unit 51 holds the band consumption rule information shown in Fig. 11, the following equation is used to calculate the remaining band of each user terminal that uses a single multicast traffic or a plurality of multicast traffic:

[Equation 2]

$$\text{Remaining band} = \text{Guaranteed band} - \Sigma \ [(\text{Guaranteed band} \ / \ \text{Total of the guaranteed bands of the group members}) \times \text{Band necessary for one multicast traffic}]$$

With (Equation 2), a quotient is determined by dividing the guaranteed band of the user terminal, for which the remaining band is to be determined, by the total of the guaranteed bands of the group members and a subtracted band is determined as the value obtained by multiplying the determined quotient by the band necessary for transmission of a single multicast traffic.

And with (Equation 2), the remaining band is determined as the value obtained by subtracting the sum of such subtracted bands from the guaranteed band of the user terminal for which the remaining band is to be determined.

A subtracted band is determined for each multicast traffic in (Equation 2) since there are cases where each user terminal uses a plurality of multicast traffic.

For the sake of simplicity, with the next example, a case where a single multicast traffic is used by user terminals 4a to 4e of Fig. 1 and the remaining bands are calculated using (Equation 2) shall be assumed. Here, the guaranteed band of user terminal 4a shall be 2Mbps, the guaranteed band of user terminal 4b shall be 3Mbps, the guaranteed band of user terminal 4c shall be 5Mbps, the guaranteed band of user terminal 4d shall be 2Mbps, the guaranteed band of user terminal 4e shall be 3Mbps, and the guaranteed band of user terminal 4f shall be 5Mbps.

Since the remaining bands are calculated according to each of shared networks NW1 and NW2, in the present case, the total of the guaranteed bands of the group members in (Equation 2) is set to 10Mbps for calculation of the remaining band of each of user terminals 4a to 4c and the total of the guaranteed bands of the group members in (Equation 2) is set to 5Mbps for calculation of the remaining band of each of user terminals 4d and 4e.

Meanwhile, since the subtracted band is "0" for user terminal 4f, which does not use multicast traffic, band calculation unit 54 makes the guaranteed band of user terminal 4f be its remaining band.

Also in this case, band calculation unit 54 makes the bands necessary for transmission of multicast traffic be the bands allocated to multicast queue 18 of Fig. 2 and to the multicast queue (not shown) of output I/F 11b of Fig. 2.

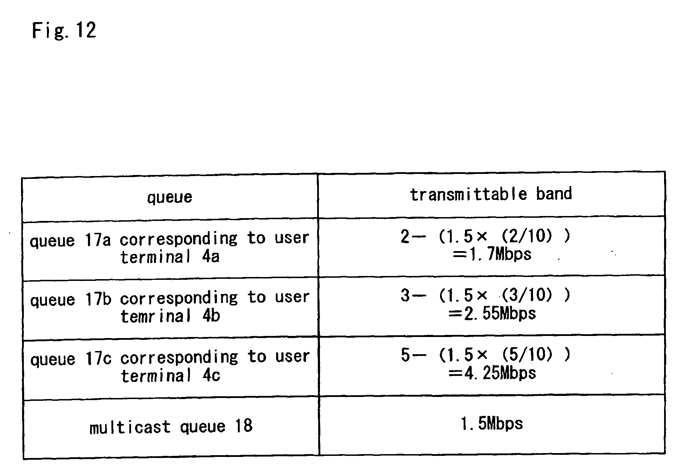

What the transmittable bands of the queues and multicast queue of Fig. 2 will be shall now be described by way of specific examples and using Fig. 12.

Here, the output I/F 11a of router 1 of Fig. 2 and user terminals 4a to 4c of Fig. 1 shall be noted.

It shall be deemed that the band of shared network NW1 is 10Mbps, the operation rules holding unit 51 of Fig. 2 holds the operation rules of Fig. 11, and band calculation unit 54 calculates the remaining bands using (Equation 2).

It shall also be deemed that user terminals 4a to 4c use the same, single multicast traffic and that the band necessary for transmission of this multicast traffic is 1.5Mbps.

Fig. 12 is an example diagram of the transmittable bands of queues 17a to 17c and multicast queue 18 that are in accordance with the operation rules of Fig. 11 in the case where user terminals 4a to 4c use the same, single multicast traffic.

As shown in Fig. 11, the ratio of the guaranteed bands of user terminals 4a to 4c is 2:3:5.

Thus as shown in Fig. 12, the transmittable band (remaining band) of queue 17a, corresponding to user terminal 4a, has the value of 1.7Mbps obtained by subtracting 0.3Mbps, which is the product (subtracted band) obtained by multiplying the band of 1.5Mbps necessary for transmission of the multicast traffic by 2/10, from the guaranteed band of 2Mbps of user terminal 4a.

Likewise, the transmittable band (remaining band) of queue 17b, corresponding to user terminal 4b, has the value of 2.55Mbps obtained by subtracting 0.45Mbps, which is the product (subtracted band) obtained by multiplying the band of 1.5Mbps necessary for transmission of the multicast traffic by 3/10, from the guaranteed band of 3Mbps of user terminal 4b.

Likewise, the transmittable band (remaining band) of queue 17c, corresponding to user terminal 4c, has the value of 4.25Mbps obtained by subtracting 0.75Mbps, which is the product (subtracted band) obtained by multiplying the band of 1.5Mbps necessary for transmission of the multicast traffic by 5/10, from the guaranteed band of 5Mbps of user terminal 4c.

The transmittable band of multicast queue 18 is 1.5Mbps, which is the band necessary for transmission of the multicast traffic.

As has been described thus far, the following can be said when the subjects of band guarantee are the user terminals 4a to 4f.

With the present embodiment, the band calculation unit 54 calculates the bands to be allocated to the respective user terminals 4a to 4f so that the bands necessary for transmission of multicast traffic are consumed by the group members receiving the multicast traffic (see Figs. 3 and 11).

The schedulers of Fig. 2 then makes the bands calculated by band calculation unit 54 be the packet transmittable bands of the queues of Fig. 2 that correspond to the respective user terminals 4a to 4f.

By thus virtually handling the group members that receive multicast traffic as if they consume bands, the bands (guaranteed bands) that can be used by the respective user terminals 4a to 4f that use shared networks NW1 and NW2 can be guaranteed.

Moreover, since each scheduler of Fig. 2 makes the band necessary for transmission of multicast traffic be the multicast packet transmittable band of the corresponding multicast queue of Fig. 2, the band for transmission of multicast traffic can be secured.

The present embodiment can thus realize band guarantee of user terminals 4a to 4f that accommodates for multicast communication in shared networks NW1 and NW2.

Also, when a user terminal among user terminals 4a to 4f notifies the start of receiving or end of receiving of multicast traffic via video server 6, that is, when there is a change of group member that receives multicast traffic or there is use of new multicast traffic, multicast management unit 53 changes the multicast information (Fig. 5).

Multicast management unit 53 thus changes the multicast information when there is a change in group member or when a user terminal uses new multicast traffic.

When the multicast information managed by multicast management unit 53 is changed, band calculation unit 54 calculates anew the bands to be allocated to user terminals 4a to 4f based on the changed multicast information.

As a result, the bands (guaranteed bands) that can be used by the respective user terminals 4a to 4f that use shared networks NW1 and NW2 can be guaranteed even when there is a change in group member or when a user terminal uses new multicast traffic.

When band calculation unit 54 uses (Equation 1), a quotient is determined by dividing the band necessary for transmission of a multicast traffic by the number of group members that receive the multicast traffic and the difference obtained by subtracting the determined quotient from the guaranteed band of a group member is made the band to be allocated to the group member.

By thus virtually handling a group member as if it has consumed a band by means of uniform subtraction of band from the guaranteed band in accordance with the number of group members, user terminal band guarantee that accommodates for multicast communication can be realized.

When band calculation unit 54 uses (Equation 2), a group member that receives multicast traffic is allocated a band obtained by reducing the guaranteed band of the group member in a manner such that the band necessary for transmission of the multicast traffic is consumed by the group member receiving the multicast traffic in accordance with the ratio of the guaranteed bands of group members that receive the multicast traffic.

By thus virtually handling a group member as if it has consumed a band by means of band subtraction from the guaranteed band of the group member in accordance with the proportion of the guaranteed band allocated to the group member, user terminal band guarantee that accommodates for multicast communication can be realized.

Band calculation unit 54 also calculates bands to be allocated to the respective user terminals 4a to 4f according to each of the shared networks NW1 and NW2 based on the network configuration information (Fig. 4) managed by configuration information management unit 52.

Thus in the case where router 1 is connected to the plurality of networks NW1 and NW2, the bands (guaranteed bands) that can be used by the respective user terminals 4a to 4f can be guaranteed according to each of the shared networks NW1 and NW2.

Cases where the subjects of band guarantee are routers 3a to 3f shall now be described. Here, routers 3a to 3f are assumed to be home routers that connect home networks with an external network, and router 3a and user terminal 4a are included in a home network 8a. Likewise, router 3b and user terminal 4b, router 3c and user terminal 4c, router 3d and user terminal 4d, router 3e and user terminal 4e, and router 3f and user terminal 4f are included in home networks 8b, 8c, 8d, 8e, and 8f, respectively.

That is in the present case, useable bands (guaranteed bands) are guaranteed according to each of home networks 8a to 8f. In the following, in order to distinguish the routers 3a to 3f that are subjects of band guarantee from the other routers 1, 2a, and 2b, the routers 3a to 3f that are the subjects of band guarantee shall be referred to as "home routers 3a to 3f."

The operation rules holding unit 51 of Fig. 2 shall now be described.

Operation rules holding unit 51 of Fig. 2 holds information on the guaranteed bands of home routers 3a to 3c (home networks 8a to 8c) and the band consumption rule information of the shared network NW1.

The band consumption rule information is information on a rule that sets forth how a band necessary for transmission of multicast traffic is consumed when at least one unit among the user terminals 4a to 4c that use shared network NW1 uses the multicast traffic.

To be more specific, the band consumption rule information comprises a rule for reducing the guaranteed band of a home router that relays multicast traffic from router 2a and transmits the multicast traffic to user terminals of home networks (such a home router shall be referred to hereinafter as a "group member") in a manner such that group member consumes the band necessary for transmission of the multicast traffic. Here, a band that is subtracted from a guaranteed band shall be referred to as a "subtracted band."

To repeat, of the home routers 3a to 3c, the home routers that are connected to user terminals that use multicast traffic are the group members for the multicast traffic, and a home router that is connected to user terminals that do not use multicast traffic is not a group member.

Operation rules holding unit 51 also holds the information on the guaranteed bands of home routers 3d to 3f (home networks 8d to 8f) and the band consumption rule information of the shared network NW2.

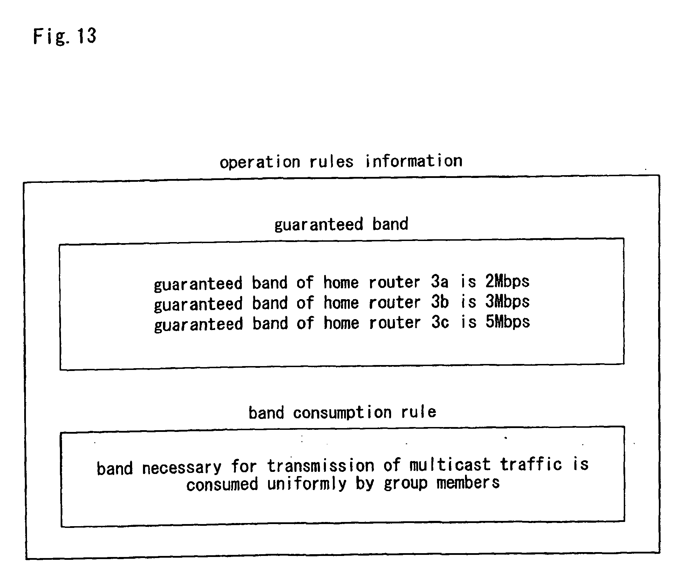

Fig. 13 is an example diagram of the exemplary operation rules information held by operation rules holding unit 51. An example of the operation rules information for home routers 3a to 3c is shown in Fig. 13.

An example, wherein the band of shared network NW1 is 10Mbps, and of this, the guaranteed band of home router 3a is 2Mbps, the guaranteed band of home router 3b is 3Mbps, and the guaranteed band of home router 3c is 5Mbps, is given in Fig. 13.

The example of Fig. 13 is also one in which the content of the band consumption rule information stipulates that the band necessary for transmission of multicast traffic be consumed uniformly by the group members.

Configuration information management unit 52 of Fig. 2 shall now be described.

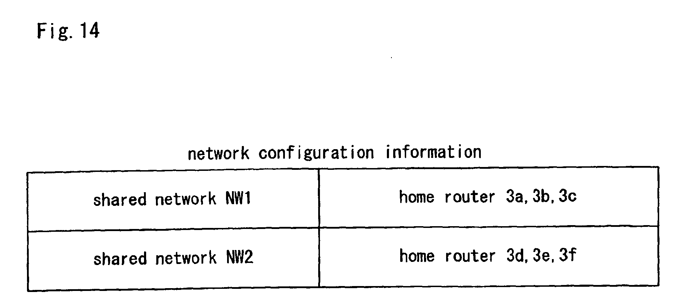

Fig. 14 is an example diagram of the network configuration information managed by configuration information management unit 52 of Fig. 2. As shown in Fig. 14, with configuration information management unit 52, the shared networks NW1 and NW2 and the home routers 3a to 3f that use the shared networks are managed in an associated form as network configuration information.

Here, with regard to home routers 3a to 3f, if the home routers 3a to 3f use a NAT (Network Address Translation) function to connect to user terminals 4a to 4f, ascertainment of the addresses of the WAN interfaces of home routers 3a to 3f is enabled.

On the other hand, if the home routers 3a to 3f connect to user terminals 4a to 4f without using a NAT function, ascertainment of the network addresses of the home networks 8a to 8f to which home routers 3a to 3f belong is enabled.

Multicast management unit 53 of Fig. 2 shall now be described.

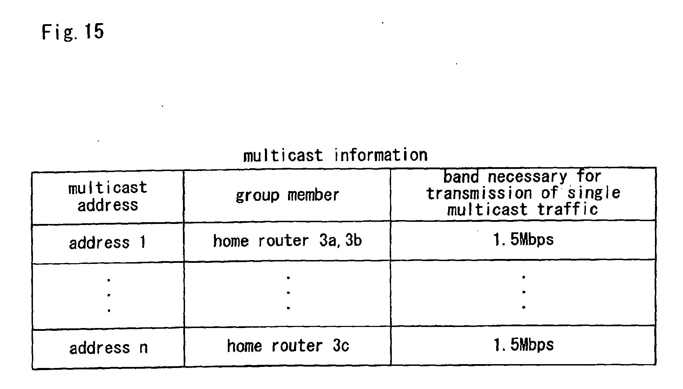

Fig. 15 is an example diagram of the multicast information managed by the multicast management unit 53 of Fig. 2.

In the case where home routers 3a to 3f are connected to user terminals 4a to 4f, the multicast addresses, information on the group members, and information on the band necessary for transmission of a single multicast traffic are managed in an associated manner as multicast information by multicast management unit 53 as shown in Fig. 15.

Here, information on the group members (home routers that transmit multicast traffic to user terminals) is information by which the home routers that transmit multicast traffic to user terminals can be identified directly or indirectly.

In the case where the home routers are connected to the user terminals using a NAT function, the addresses of the WAN interfaces of the home routers can be given as an example of information by which home routers that transmit multicast traffic to user terminals can be identified directly.

In the case where the home routers are connected to the user terminals without using a NAT function, the network addresses of the home networks to which the home routers belong can be given as an example of information by which home routers that transmit multicast traffic to user terminals can be identified directly.

The names of users that use multicast traffic via the home routers can be given as an example of information by which home routers that transmit multicast traffic to user terminals can be identified indirectly.

Multicast management unit 53 also renews the multicast information in accordance with a change of group member of each multicast traffic or the use of new multicast traffic. This point is the same as that in the case where the subjects of band guarantee are the user terminals 4a to 4f.

However, when user terminals 4a to 4f notify video server 6 of the start of receiving or end of receiving of multicast traffic, information on home routers is included in this notification. Here, the "information on home routers" is the same in meaning as the "information on group members" managed by multicast management unit 53.

Also when video server 6 notifies network management server 5 of the start of receiving or end of receiving of multicast traffic, this notification includes multicast addresses, information on the band necessary for transmission of multicast traffic, and information on home routers.

Band calculation unit 54 of Fig. 2 shall now be described.

Band calculation unit 54 uses the multicast information managed by multicast management unit 53 and the guaranteed band information held by operation rules holding unit 51 to calculate bands to be allocated to home routers 3a to 3f in accordance with the band consumption rule information held by operation rules holding unit 51.

The band thus calculated by band calculation unit 54 and allocated to a home router among home routers 3a to 3f is called a "remaining band." In this case, the remaining band of a home router (group member) connected to user terminals that use multicast traffic will be the band obtained by subtracting the subtracted band from the guaranteed band, and for a home router that is connected to user terminals that do not use multicast traffic, the remaining band will be its guaranteed band since the subtracted band is "0."

Here, band calculation unit 54 calculates the remaining bands of home routers 3a to 3f according to each of the shared networks NW1 and NW2 based on the network configuration information managed by configuration information management unit 52.

Thus even in the case where the same multicast traffic is to be used in the two shared networks NW1 and NW2, the remaining band of each of home routers 3a to 3f is calculated according to each of shared networks NW1 and NW2.

The bands to be allocated to multicast queue 18 of Fig. 2 and the multicast queue (not shown) of output I/F 11b of Fig. 2 are calculated by band calculation unit 54 in the same manner as in the case where the subjects of band guarantee are user terminals 4a to 4f.

Band calculation unit 54 then outputs the information on the remaining bands of home routers 3a to 3f and the information on the bands to be allocated to the multicast queues to control information generation unit 55.

A specific example of remaining band calculation by band calculation unit 54 shall now be described.

For example, in the case where operation rules holding unit 51 holds the band consumption rule information shown in Fig. 13, band calculation unit 54 uses (Equation 1) to calculate the remaining band of each home router that transmits a single multicast traffic or a plurality of multicast traffic to user terminals.

A quotient (subtracted band) is determined for each multicast traffic in (Equation 1) since there are cases where each home router transmits a plurality of multicast traffic to user terminals.

For the sake of simplicity, with the next example, a case, wherein a single multicast traffic is used by user terminals 4a to 4e of Fig. 1, home routers 3a to 3e transmit the multicast traffic to user terminals 4a to 4e, and the remaining bands are calculated using (Equation 1), shall be assumed.

Here, the guaranteed band of home router 3a shall be 2Mbps and the band necessary for transmission of the multicast traffic shall be 1.5Mbps.

Since the remaining bands are calculated according to each of shared networks NW1 and NW2, in the present case, the number of group members in (Equation 1) is set to "3" for calculation of the remaining band of each of home routers 4a to 4c and the number of group members in (Equation 1) is set to "2" for calculation of the remaining band of each of home routers 3d and 3e.

Since the band necessary for transmission of multicast traffic is 1.5Mbps and the guaranteed band of home router 3a is 2Mbps, the remaining band of home router 3a as calculated using (Equation 1) will be: 2 - (1.5/3) = 1.5Mbps. The remaining bands of the other home routers 3b to 3e can be calculated in likewise manner using (Equation 1).

Meanwhile, since user terminal 4f does not use multicast traffic, home router 3f does not transmit multicast traffic to user terminal 4f. Since the subtracted band for home router 3f that does not transmit multicast traffic is "0," band calculation unit 54 makes the guaranteed band of home router 3f be its remaining band.

Also, band calculation unit 54 makes the bands necessary for transmission of multicast traffic be the bands allocated to multicast queue 18 of Fig. 2 and to the multicast queue (not shown) of output I/F 11b of Fig. 2.

Control information generation unit 55 of Fig. 2 shall now be described. Here, output I/F 11a of Fig. 2, which is connected to network NW1, shall be noted.

Control information generation unit 55 generates control information for controlling output I/F 11a of router 1 based on information on the remaining bands of home routers 3a to 3c and information on the band allocated to multicast queue 18 that have been output by band calculation unit 54.

The control information includes at least the following information to be instructed to scheduler 19 and the information to be instructed to classification unit 16.

The information instructed to scheduler 19 is information instructing scheduler 19 to make the remaining bands of the respective home routers 3a to 3c calculated by band calculation unit 54 be the packet transmittable bands of the respective queues 17a to 17c and make the band allocated to multicast queue 18 calculated by band calculation unit 54 be the multicast packet transmittable band of multicast queue 18.

The information instructed to classification unit 16 is information instructing classification unit 16 to make the multicast packets (packets with multicast addresses) be provided to multicast queue 18 and the packets besides multicast packets be classified according to which of the home routers 3a to 3c the packets are addressed and be allocated to the respective queues 17a to 17c in accordance with the network addresses of home networks that are held by the packets.

Such information instructed to classification unit 16 is prepared using the network configuration information managed by configuration information management unit 52.

Control information generation unit 55 also generates control information for controlling output I/F 11b of router 1 in the same manner as the control information for controlling output I/F 11a of router 1.

Control information transmission unit 56 shall now be described.

Control information transmission unit 56 transmits the control information generated by control information generation unit 55 to output 1/F 11a and 11b of router 1. This point is the same as that in the case where the subjects of band guarantee are user terminals 4a to 4f.

The functions and operations of router 1 of band guarantee system 100 of the present embodiment shall now be described. First, the output I/F 11a of Fig. 2 shall be described.

Classification unit 16 outputs multicast packets to multicast queue 18 in accordance with instructions by control information received from control information transmission unit 56.

Meanwhile, with a packet that is not a multicast packet, classification unit 16 references the network addresses of the home networks to judge which of the home routers 3a to 3c the packet is to be sent and then outputs the packet to the corresponding queue among queues 17a to 17c.

Here, if the destination of a packet is home router 3a, the packet is output to queue 17a, if the destination of a packet is home router 3b, the packet is output to queue 17b, and if the destination of a packet is home router 3c, the packet is output to queue 17c.

Upon receiving instructions by control information from control information transmission unit 56, scheduler 19 sends packets to router 2a in accordance with the respective transmittable bands allocated to queues 17a to 17c.

For example, the remaining band for home router 3a that has been calculated by band calculation unit 54 becomes the transmittable band for queue 17a.

Also upon receiving instructions by control information from control information transmission unit 56, scheduler 19 sends multicast packets to router 2a in accordance with the transmittable band allocated to multicast queue 18.

The functions and operations of the classification unit (not shown), the three queues corresponding to home routers 3d to 3f (not shown), the multicast queue (not shown), and the scheduler (not shown) of output I/F 11b are the same as the functions and operations of classification unit 16, the three queues 17a to 17c corresponding to home routers 3a to 3c, multicast queue 18, and scheduler 19 of output I/F 11a.

Also, WAN input I/F 14, WAN output I/F 15, input I/F 12a and 12b, and forwarding module 13 function and operate in the same manner as in the case where the subjects of band guarantee are user terminals 4a to 4f.

An example of operation rules that differ from the operation rules of Fig. 13 shall now be described.

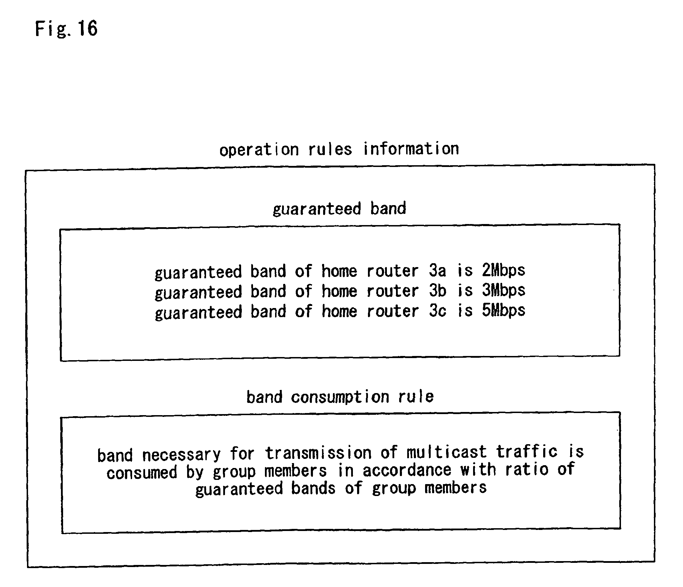

Fig. 16 is an example diagram of other exemplary operation rules information held by operation rules holding unit 51 of Fig. 2. An example of operation rules information for home routers 3a to 3c is shown in Fig. 16.

With regard to the information on guaranteed bands in Fig. 16, the band of shared network NW1 is 10Mbps, and of this 10Mbps, the guaranteed band of home router 3a is 2Mbps, the guaranteed band of home router 3b is 3Mbps, and the guaranteed band of home router 3c is 5Mbps. The present example is the same as that of Fig. 13 in regard to this point.

The example of Fig. 16 is also one in which the content of the band consumption rule information stipulates that the band necessary for transmission of multicast traffic be consumed by the home routers (group members) that relay the multicast traffic from router 2a and transmit the multicast traffic to user terminals that use the multicast traffic in accordance with the ratio of the guaranteed bands of the home routers (group members) that transmit the multicast traffic.

In the case where operation rules holding unit 51 holds the band consumption rule information shown in Fig. 16, (Equation 2) is used to calculate the remaining band of each home router that transmits a single multicast traffic or a plurality of multicast traffic to user terminals.

A subtracted band is determined for each multicast traffic in (Equation 2) since there are cases where each home router transmits a plurality of multicast traffic to user terminals.

For the sake of simplicity, with the next example, a case, wherein a single multicast traffic is used by user terminals 4a to 4e of Fig. 1, home routers 3a to 3e transmit this multicast traffic to user terminals 4a to 4e, and the remaining bands are calculated using (Equation 2), shall be assumed.

Here, the guaranteed band of home router 3a shall be 2Mbps, the guaranteed band of home router 3b shall be 3Mbps, the guaranteed band of home router 3c shall be 5Mbps, the guaranteed band of home router 3d shall be 2Mbps, the guaranteed band of home router 3e shall be 3Mbps, the guaranteed band of home router 3f shall be 5Mbps, and the band necessary for transmission of the multicast traffic shall be 1.5Mbps.

Since the remaining bands are calculated according to each of shared networks NW1 and NW2, in the present case, the total of the guaranteed bands of the group members in (Equation 2) is set to 10Mbps for calculation of the remaining band of each of home routes 3a to 3c and the total of the guaranteed bands of the group members in (Equation 2) is set to 5Mbps for calculation of the remaining band of each of home routers 3d and 3e.

Since the band necessary for transmission of multicast traffic is 1.5Mbps and the guaranteed band of home router 3a is 2Mbps, the remaining band of home router 3a as calculated using (Equation 2) will be: 2 - (2/10) × 1.5 = 1.7Mbps. The remaining bands of the other home routers 3b to 3e can be calculated in likewise manner using (Equation 2).

Meanwhile, since user terminal 4f does not use multicast traffic, home router 3f does not transmit multicast traffic to user terminal 4f. Since the subtracted band for home router 3f that does not transmit multicast traffic is "0," band calculation unit 54 makes the guaranteed band of home router 3f be its remaining band.

Also in this case, band calculation unit 54 makes the bands necessary for transmission of multicast traffic be the bands allocated to multicast queue 18 of Fig. 2 and to the multicast queue (not shown) of output I/F 11b of Fig. 2.

As has been described thus far, the following can be said when the subjects of band guarantee are the home routers 3a to 3f (home networks 8a to 8f).

With the present embodiment, the band calculation unit 54 of Fig. 2 calculates the bands to be allocated to the respective home routers 3a to 3f in a manner such that the bands necessary for transmission of multicast traffic are consumed by the group members that transmit the multicast traffic to user terminals (see Figs. 13 and 16).

The schedulers of Fig. 2 then make the bands calculated by band calculation unit 54 be the packet transmittable bands of the queues of Fig. 2 that correspond to the respective home routers 3a to 3f.

By thus virtually handling the group members that transmit multicast traffic to user terminals as if they consume bands, the bands (guaranteed bands) that can be used by the respective home routers 3a to 3f that use shared networks NW1 and NW2 can be guaranteed.

Moreover, since each scheduler of Fig. 2 makes the band necessary for transmission of multicast traffic be the multicast packet transmittable band of the corresponding multicast queue of Fig. 2, the band for transmission of multicast traffic can be secured.

The present embodiment can thus realize band guarantee of home routers 3a to 3f that accommodates multicast communication.

Also, when a user terminal among user terminals 4a to 4f notifies the start of receiving or end of receiving of multicast traffic via video server 6, that is, when there is a change of group member that transmits multicast traffic to user terminals or a home router transmits new multicast traffic to user terminals, multicast management unit 53 changes the multicast information (Fig. 15).

Multicast management unit 53 thus changes the multicast information when there is a change in group member or when a home router transmits new multicast traffic to user terminals.

When the multicast information managed by multicast management unit 53 is changed, band calculation unit 54 calculates anew the bands to be allocated to home routers 3a to 3f based on the changed multicast information.

As a result, the bands (guaranteed bands) that can be used by the respective home routers 3a to 3f that use shared networks NW1 and NW2 can be guaranteed even when there is a change in group member or when a home router transmits new multicast traffic to user terminals.

When band calculation unit 54 uses (Equation 1), a quotient is determined by dividing the band necessary for transmission of a multicast traffic by the number of group members that transmit the multicast traffic to user terminals and the difference obtained by subtracting the determined quotient from the guaranteed band of a group member is made the band to be allocated to the group member.

By thus virtually handling a group member as if it has consumed a band by means of uniform subtraction of band from the guaranteed band in accordance with the number of group members, home router band guarantee that accommodates for multicast communication can be realized.

When band calculation unit 54 uses (Equation 2), a group member is allocated a band obtained by reducing the guaranteed band of the group member in a manner such that the band necessary for transmission of the multicast traffic will be consumed by the group member in accordance with the ratio of the guaranteed bands of group members that transmit the multicast traffic to user terminals.

By thus virtually handling a group member as if it has consumed a band by means of band subtraction from the guaranteed band of the group member in accordance with the proportion of the guaranteed band allocated to the group member, home router band guarantee that accommodates for multicast communication can be realized.

Band calculation unit 54 also calculates bands to be allocated to the respective home routers 3a to 3f according to each of the shared networks NW1 and NW2 based on the network configuration information (Fig. 14) managed by configuration information management unit 52.

Thus in the case where router 1 is connected to the plurality of networks NW1 and NW2, the bands (guaranteed bands) that can be used by the respective home routers 3a to 3f can be guaranteed according to each of the shared networks NW1 and NW2.

Though in Fig. 1, two shared networks, that is, shared networks NW1 and NW2 are connected to router 1, the present invention is not limited thereto, and three or more shared networks may be connected or just one shared network may be connected.

In these cases, output I/F and input I/F, having the same functions as the output 1/F 11a and input I/F 12a of Fig. 2, are provided in numbers corresponding to the number of shared networks.

Also though in Fig. 1, three routers (home routers) 3a to 3c are connected to the user terminal side of router 2a, a single router (home router) or two or four or more routers (home routers) may be connected. The same applies to the user terminal side of router 2b.

Also though in Fig. 1, a single user terminal 4a is connected to router (home router) 3a, a plurality of user terminals may be connected. The same applies to routers (home routers) 3b to 3f.

Also in cases where the subjects of band guarantee are user terminals, each of the output I/F, such as the output I/F 11a of Fig. 2, etc., that are provided in correspondence to shared networks, is provided with queues the number of which corresponds to the number of user terminals that are connected to the corresponding shared network.

Also in cases where the subjects of band guarantee are home routers, each of the output I/F, such as the output I/F 11a of Fig. 2, etc., that are provided in correspondence to shared networks, is provided with queues the number of which corresponds to the number of home routers that are connected to the corresponding shared network.

Also, though in Fig. 1, video server 6 is given as a server that distributes multicast traffic, the present invention is not limited thereto, and furthermore a plurality of servers may exist as servers that distribute multicast traffic.

Also in place of providing router 1 of Fig. 1, network management server 5 of Fig. 1 may be provided with the same functions as router 1.

Furthermore in place of providing network management server 5, router 1 may be provided with the same functions as network management server 5.

In the case where queues 17a to 17c of output I/F 11a and the queues of output I/F 11b are provided in accordance with user terminals 4a to 4f or home routers 3a to 3f as shown in Fig. 2 and the destinations of packets (with the exception of multicast packets) are thus the user terminals 4a to 4f or home routers 3a to 3f, each packet is provided to a corresponding queue.

Packets are then sent from such queues to the user terminals 4a to 4f or home routers 3a to 3f that are the destinations.

Thus with the present embodiments, band guarantee of user terminals 4a to 4f or home routers 3a to 3f can be realized not just for multicast communication but also in cases where unicast communication or other communication system is used.

Having described preferred embodiments of the invention with reference to the accompanying drawings, it is to be understood that the invention is not limited to those precise embodiments, and that various changes and modifications may be effected therein by one skilled in the art without departing from the scope of the invention as defined in the appended claims.

**Claims**

1. A band guarantee system (100) for guaranteeing a plurality of bands, each band corresponding to each of a plurality of band-sharing devices using a shared network (NW1, NW2), each of the plurality of band-sharing devices being one of a user terminal (4a-4f) and a relay device (1,2a,2b,3a-3f), **characterised in that** the band guarantee system (100) comprises:

   a band calculation unit (54) for calculating the plurality of bands, each of which is allocated to each of the plurality of band-sharing devices according to the following rule (i) and rule (ii),
   rule (i): a band allocated to a band-sharing device that does not receive a multicast packet among the plurality of band-sharing devices is a band guaranteed thereto,
   rule (ii): a band allocated to a band-sharing device that receives multicast packets among the plurality of band-sharing devices is a band guaranteed thereto decreased by a certain band, where the certain band is greater than zero, necessary for the transmission of the multicast packets.

2. The band guarantee system as set forth in claim 1, wherein at least one of the plurality of band-sharing devices is a router (3a-3f).

3. The band guarantee system (100) as set forth in claim 1, further comprising:

   a relay device (1) for transmitting packets to the plurality of band-sharing devices via the shared network (NW1, NW2); and
   a network management server (5) for controlling said relay device (1), said network management server (5) in turn comprising:

      an operation rules holding unit (51) for holding information on a guaranteed band that is guaranteed for each of the plurality of band-sharing devices and information on a band consumption rule;
      a multicast management unit (53) for associating, as multicast information, a multicast address, information on each of the plurality of band-sharing devices that receives multicast traffic having the multicast address, and information on the band necessary for transmission of the multicast traffic together to manage the associated multicast address, information on each of the plurality of band-sharing devices, and information on the band,
      wherein said relay device (1) is arranged to transmit packets to the plurality of band-sharing devices according to the plurality of bands calculated by said band calculation unit (54).

4. The band guarantee system (100) as set forth in claim 3, wherein, when the multicast information managed by said multicast management unit (53) is changed, said band calculation unit (54) is arranged to calculate anew the plurality of bands, each of which is allocated to each of the plurality of band-sharing devices according to both rule (i) and rule (ii).

5. The band guarantee system (100) as set forth in claim 1, wherein the certain hand is a quotient obtained by dividing a band necessary for transmission of a certain multicast traffic by the number of band-sharing devices that receive the certain multicast traffic among the plurality of band-sharing devices.

**6.** The band guarantee system (100) as set forth in claim 1, wherein the certain band is determined in accordance with a ratio of guaranteed bands of user terminals that receive the multicast traffic among the plurality of band-sharing devices.

**Patentansprüche**

**1.** Bandbreitengewährleistungssystem (100) zum Gewährleisten einer Vielzahl von Bandbreiten, wobei jede Bandbreite jeweils einer Vorrichtung einer Vielzahl von ein gemeinsames Band nutzenden Vorrichtungen entspricht, die ein Gemeinschaftsnetz (NW1, NW2) nutzen, wobei jede der Vielzahl von ein gemeinsames Band nutzenden Vorrichtungen ein Teilnehmer-Anschlussgerät (4a - 4f) und eine Relaisvorrichtung (1, 2a, 2b, 3a - 3f) ist, **dadurch gekennzeichnet, dass** das Bandbreitengewährleistungssystem (100) eine Bandbreiten-Berechnungseinheit (54) zum Berechnen der Vielzahl von Bandbreiten aufweist, die jeweils einer der Vielzahl von ein gemeinsames Band nutzenden Vorrichtungen nach den folgenden Regeln (I) und (II) zugewiesen werden:

Regel (I): eine Bandbreite, die unter der Vielzahl von ein gemeinsames Band nutzenden Vorrichtungen einer ein gemeinsames Band nutzenden Vorrichtung zugewiesen wird, die kein Multicast-Paket empfängt, ist eine für diese Vorrichtung gewährleistete Bandbreite und

Regel (II): eine Bandbreite, die unter der Vielzahl von ein gemeinsames Band nutzenden Vorrichtungen einer ein gemeinsames Band nutzenden Vorrichtung zugewiesen wird, die Multicast-Pakete empfängt, ist eine für diese Vorrichtung gewährleistete Bandbreite, die um eine bestimmte zum Übertragen der Multicast-Pakete benötigte Bandbreite, wobei die bestimmte Bandbreite größer als null ist, verringert ist.

**2.** Bandbreitengewährleistungssystem (100) nach Anspruch 1, **dadurch gekennzeichnet, dass** mindestens eine der Vielzahl von ein gemeinsames Band nutzenden Vorrichtungen ein Router (3a - 3f) ist.

**3.** Bandbreitengewährleistungssystem (100) nach Anspruch 1, das weiterhin
eine Relaisvorrichtung (10) zum Senden von Paketen zu der Vielzahl von ein gemeinsames Band nutzenden Vorrichtungen über das Gemeinschaftsnetz (NW1, NW2) und
einen Netzmanagementserver (5) zum Steuern der Relaisvorrichtung (1)
aufweist, der wiederum
eine Operationsregel-Halte-Einheit (51) zum Halten von Informationen zu einer gewährleisteten Bandbreite, die für jede der Vielzahl von ein gemeinsames Band nutzenden Vorrichtungen gewährleistet ist, und von Informationen zu einer Bandbreiten-Verbrauchsregel und
eine Multicast-Verwaltungseinheit (53) zum Verknüpfen, als Multicast-Informationen, einer Multicast-Adresse, von Informationen zu jeder der Vielzahl von ein gemeinsames Band nutzenden Vorrichtungen, die Multicast-Verkehr mit der Multicast-Adresse empfängt, und von Informationen zu der zur Übertragung des Multicast-Verkehrs benötigten Bandbreite, um die verknüpfte Multicast-Adresse, die Informationen zu jeder der Vielzahl von ein gemeinsames Band nutzenden Vorrichtungen und die Informationen zur Bandbreite zu verwalten,
aufweist,
**dadurch gekennzeichnet, dass** die Relaisvorrichtung (1) so eingerichtet ist, dass sie Pakete zu der Vielzahl von ein gemeinsames Band nutzenden Vorrichtungen entsprechend der Vielzahl von Bandbreiten sendet, die von der Bandbreiten-Berechnungseinheit (54) berechnet werden.

**4.** Bandbreitengewährleistungssystem (100) nach Anspruch 3, **dadurch gekennzeichnet, dass** die Bandbreiten-Berechnungseinheit (54) so eingerichtet ist, dass sie, wenn die von der Multicast-Verwaltungseinheit (53) verwalteten Multicast-Informationen geändert werden, die Vielzahl von Bandbreiten, die jeweils einer der Vielzahl von ein gemeinsames Band nutzenden Vorrichtungen entsprechend den beiden Regeln (I) und (II) zugewiesen werden, aufs Neue berechnet.

**5.** Bandbreitengewährleistungssystem (100) nach Anspruch 1, **dadurch gekennzeichnet, dass** die bestimmte Bandbreite ein Quotient ist, der durch Dividieren einer zur Übertragung eines bestimmten Multicast-Verkehrs benötigten Bandbreite durch die Anzahl von ein gemeinsames Band nutzenden Vorrichtungen, die den bestimmten Multicast-Verkehr empfangen, unter der Vielzahl von ein gemeinsames Band nutzenden Vorrichtungen erhalten wird.

**6.** Bandbreitengewährleistungssystem (100) nach Anspruch 1, **dadurch gekennzeichnet, dass** die bestimmte Bandbreite entsprechend einem Anteil gewährleisteter Bandbreiten von Teilnehmer-Anschlussgeräten, die den Multicast-Verkehr empfangen, unter der Vielzahl von ein gemeinsames Band nutzenden Vorrichtungen ermittelt wird.

**Revendications**

1. Système à garantie de bandes (100) destiné à garantir une pluralité de bandes, chaque bande correspondant à chacun d'une pluralité de dispositifs à partage de bande utilisant un réseau partagé (NW1, NW2), chaque dispositif de la pluralité de dispositifs à partage de bande étant l'un d'un terminal d'utilisateur (4a à 4f) et d'un dispositif de relais (1, 2a, 2b, 3a à 3f), **caractérisé en ce que** le système à garantie de bandes (100) comprend :

   une unité de calcul de bandes (54) destinée à calculer la pluralité de bandes, dont chacune est allouée à chaque dispositif de la pluralité de dispositifs de partage de bande conformément à la règle (i) et à la règle (ii) suivantes,
   règle (i) : une bande allouée à un dispositif à partage de bande qui ne reçoit pas un paquet à diffusion multiple parmi la pluralité de dispositifs à partage de bande est une bande qui lui est garantie,
   règle (ii) : une bande allouée à un dispositif à partage de bande qui reçoit des paquets à diffusion multiple parmi la pluralité de dispositifs à partage de bande est une bande qui lui est garantie diminuée d'une certaine bande, où la certaine bande est supérieure à zéro, nécessaire pour la transmission des paquets à diffusion multiple.

2. Système à garantie de bandes selon la revendication 1, dans lequel au moins un dispositif de la pluralité de dispositifs à partage de bande est un routeur (3a à 3f).

3. Système à garantie de bandes (100) selon la revendication 1, comprenant en outre :

   un dispositif de relais (1) destiné à transmettre des paquets à la pluralité de dispositifs à partage de bande par l'intermédiaire du réseau partagé (NW1, NW2), et
   un serveur de gestion de réseau (5) destiné à commander ledit dispositif de relais (1), ledit serveur de gestion de réseau (5) comprenant à son tour :

      une unité de conservation de règles de fonctionnement (51) destinée à conserver les informations sur une bande garantie qui est garantie pour chaque dispositif de la pluralité de dispositifs à partage de bande et des informations sur une règle de consommation de bande,
      une unité de gestion de diffusion multiple (53) destinée à associer ensemble, en tant qu'informations de diffusion multiple, une adresse de diffusion multiple, des informations sur chaque dispositif de la pluralité de dispositifs à partage de bande qui reçoit un trafic à diffusion multiple comportant l'adresse de diffusion multiple, et des informations sur la bande nécessaire pour une transmission du trafic à diffusion multiple pour gérer l'adresse à diffusion multiple associée, les informations sur chaque dispositif de la pluralité de dispositifs à partage de bande, et des informations sur la bande,
      dans lequel ledit dispositif de relais (1) est agencé pour transmettre des paquets à la pluralité de dispositifs à partage de bande conformément à la pluralité de bandes calculées par ladite unité de calcul de bandes (54).

4. Système à garantie de bandes (100) selon la revendication 3, dans lequel, lorsque les informations à diffusion multiple gérées par ladite unité de gestion de diffusion multiple (53) sont modifiées, ladite unité de calcul de bandes (54) est agencée pour calculer à nouveau la pluralité de bandes, dont chacune est allouée à chaque dispositif de la pluralité de dispositifs à partage de bande conformément à la fois à la règle (i) et à la règle (ii).

5. Système à garantie de bandes (100) selon la revendication 1, dans lequel la certaine bande représente un quotient obtenu en divisant une bande nécessaire pour une transmission d'un certain trafic à diffusion multiple par le nombre des dispositifs à partage de bande qui reçoivent le certain trafic à diffusion multiple parmi la pluralité de dispositifs à partage de bande.

6. Système à garantie de bandes (100) selon la revendication 1, dans lequel la certaine bande est déterminée conformément à un rapport des bandes garanties des terminaux d'utilisateurs qui reçoivent le trafic à diffusion multiple parmi la pluralité de dispositifs à partage de bande.

Fig. 1

band guarantee system 100

Fig. 2

multicast information

network management server 5

51 — operation rules holding unit

53 — multicast management unit

52 — configuration information management unit

band calculation unit — 54

55 — control information generation unit

56 — control information transmission unit

17a

a a a a

17b

b b b

16 — classification

17c

c c

scheduler — 19

18

M M

output I/F 11a

14 — WAN input I/F

13 — forwarding module

15 — WAN output I/F

WAN 7

input I/F 12a

output I/F 11b

input I/F 12b

router 2a

router 2b

router1

Fig. 3

operation rules information

guaranteed band

guaranteed band of user terminal 4a is 2Mbps
guaranteed band of user terminal 4b is 3Mbps
guaranteed band of user terminal 4c is 5Mbps

band consumption rule

band necessary for transmission of multicast traffic is
consumed uniformly by group members

Fig. 4

network configuration information

| shared network NW1 | user terminal 4a, 4b, 4c |
|---|---|
| shared network NW2 | user terminal 4d, 4e, 4f |

Fig. 5

multicast information

| multicast address | group member | band necessary for transmission of single multicast traffic |
|---|---|---|
| address 1 | user terminal 4a, 4b | 1.5Mbps |
| . . . | . . . | . . . |
| address n | user terminal 4c | 1.5Mbps |

Fig. 6 (a)

Fig. 6 (b)

| queue | transmittable band |
|---|---|
| queue 17a corresponding to user terminal 4a | 2−1.5=0.5Mbps |
| queue 17b corresponding to user terminal 4b | 3Mbps |
| queue 17c corresponding to user terminal 4c | 5Mbps |
| multicast queue 18 | 1.5Mbps |

Fig. 7 (a)

multicast traffic
1. 5Mbps

router 1

router 2a

NW1

router 3a

router 3b

router 3c

user terminal 4a

user terminal 4b

user terminal 4c

Fig. 7 (b)

| queue | transmittable band |
|---|---|
| queue 17a corresponding to user terminal 4a | 2−0.75=1.25Mbps |
| queue 17b corresponding to user terminal 4b | 3−0.75=2.25Mbps |
| queue 17c corresponding to user terminal 4c | 5Mbps |
| multicast queue 18 | 1.5Mbps |

## Fig. 8 (a)

## Fig. 8 (b)

| queue | transmittable band |
|---|---|
| queue 17a corresponding to user terminal 4a | $2-0.5=1.5$Mbps |
| queue 17b corresponding to user terminal 4b | $3-0.5=2.5$Mbps |
| queue 17c corresponding to user terminal 4c | $5-0.5=4.5$Mbps |
| multicast queue 18 | 1.5Mbps |

Fig. 9 (a)

Fig. 9 (b)

| queue | transmittable band |
|---|---|
| queue 17a corresponding to user terminal 4a | 2−0.75<br>=1.25Mbps |
| queue 17b corresponding to user terminal 4b | 3− (0.75+0.75)<br>=1.5Mbps |
| queue 17c corresponding to user terminal 4c | 5−0.75<br>=4.25Mbps |
| multicast queue 18 | 1.5+1.5<br>=3Mbps |

Fig. 10

| queue | transmittable band |
|---|---|
| queue 17a corresponding to user terminal 4a | 2Mbps |
| queue 17b corresponding to user terminal 4b | 3Mbps |
| queue 17c corresponding to user terminal 4c | 5Mbps |
| multicast queue 18 | 0Mbps |

Fig. 11

operation rules information

guaranteed band

guaranteed band of user terminal 4a is 2Mbps
guaranteed band of user terminal 4b is 3Mbps
guaranteed band of user terminal 4c is 5Mbps

band consumption rule

band necessary for transmission of multicast traffic is
consumed by group members in accordance with ratio of
guaranteed bands of group members

Fig. 12

| queue | transmittable band |
|---|---|
| queue 17a corresponding to user terminal 4a | $2-(1.5\times(2/10))$ $=1.7$Mbps |
| queue 17b corresponding to user temrinal 4b | $3-(1.5\times(3/10))$ $=2.55$Mbps |
| queue 17c corresponding to user terminal 4c | $5-(1.5\times(5/10))$ $=4.25$Mbps |
| multicast queue 18 | 1.5Mbps |

Fig. 13

operation rules information

guaranteed band

guaranteed band of home router 3a is 2Mbps
guaranteed band of home router 3b is 3Mbps
guaranteed band of home router 3c is 5Mbps

band consumption rule

band necessary for transmission of multicast traffic is
consumed uniformly by group members

Fig. 14

network configuration information

| shared network NW1 | home router 3a, 3b, 3c |
|---|---|
| shared network NW2 | home router 3d, 3e, 3f |

Fig. 15

multicast information

| multicast address | group member | band necessary for transmission of single multicast traffic |
|---|---|---|
| address 1 | home router 3a, 3b | 1. 5Mbps |
| . . . | . . . | . . . |
| address n | home router 3c | 1. 5Mbps |

Fig. 16

operation rules information

guaranteed band

guaranteed band of home router 3a is 2Mbps
guaranteed band of home router 3b is 3Mbps
guaranteed band of home router 3c is 5Mbps

band consumption rule

band necessary for transmission of multicast traffic is
consumed by group members in accordance with ratio of
guaranteed bands of group members